# EUROPÄISCHE PATENTANMELDUNG

(11) **EP 1 191 466 A1**
(43) Veröffentlichungstag der Anmeldung: **27.03.2002**
(21) Anmeldenummer: 00117943.1
(22) Anmeldetag: 21.08.2000
(51) Int. Cl.: G06F 17/60

(54) **Konfigurierbare interaktive Chartanwendung**

(71) Anmelder: ByteWorx GmbH, 81541 München (DE)
(72) Erfinder: Franke, Uwe, 81541 München (DE); Statz, Michael, 81541 München (DE)
(74) Vertreter: Rupp, Christian, Dipl.Phys.

(57) **Zusammenfassung**

Bei einer Technik zur konfigurierbaren grafischen Darstellung von Daten, wie beispielsweise Aktienkursen werden die darzustellenden Daten von einem Server (2) auf ein Terminal (5) mittels des Internets (1) geladen. Die dargestellten Daten können dann individuell auf der Anzeigeeinheit (Monitor) (6) des Terminals (5) konfiguriert werden. Dabei kann der Benutzer die Konfigurierung der Darstellung durch eine Zeigersteuereinheit (9) durch entsprechende Positionierung eines Kursors (11) in der Darstellungsfläche (12) der Daten selbst wählen. Weiterhin ist es möglich, in der Darstellungsfläche (12) der Daten markierte Schaltflächen (13, 13') anzubringen, die bei der Aktivierung durch einen Kursor (11) weitere Informationen wiedergeben, die in einem Zusammenhang mit der Position der Schaltfläche (13, 13') stehen. Beispielsweise können die Daten Aktienkursverläufe wiedergeben und die Schaltflächen (13, 13') an denjenigen zeitlichen Positionen eines Aktienkursverlaufs vorgesehen sein, an denen Ereignisse erfolgen, die für den Aktienkursverlauf von Bedeutung sein können. Schließlich ist es möglich, in die Darstellung der Daten Grenzlinien einzuziehen, wobei automatisch eine Warnung des Benutzers erfolgt, sobald der Kursverlauf die Grenzlinie unter- oder überschreitet. Desweiteren kann der Benutzer die aktuelle Darstellungsfläche (12) zusammen mit Linienstudien und Einstellungen an einen anderen Benutzer versenden.

## Beschreibung

Die vorliegende Erfindung bezieht sich auf Verfahren zur graphischen Darstellung von (zeitbezogenen) Daten, wie insbesondere Aktienkursen, auf der Anzeigeeinheit eines Datennetz-Terminals. Die vorliegende Erfindung bezieht sich weiterhin auf ein Software-Programm, das die Implementierung eines solchen Verfahrens ermöglicht, wenn es in den Speicher eines Internet-Terminals geladen ist. Schließlich bezieht sich die vorliegende Erfindung auch auf eine Internet-Website, die einem Benutzer eines Datennetz-Terminals das Herunterladen (Download) eines Software-Programms dieser Art ermöglicht.

Das allgemeine Umfeld der vorliegenden Erfindung ist das Internet und genauer gesagt die Verwendung der Möglichkeiten des Internets, um beispielsweise Kunden einer Online-Bank, eines Online-Brokers (Online-Aktienhändlers), einer Versicherung, Fondsgesellschaft oder eines Vermögensberaters auf ihrem PC die Darstellung von Aktienkursen bzw. Aktienkursverläufen zu ermöglichen. Der Benutzer kann die graphische, diagrammartige Darstellung des Aktienkurses dann dazu verwenden, eine Analyse und somit eine Prognose bezüglich des potentiellen weiteren Verlaufs des Aktienkurses zu erstellen.

Diese Art an Service von Online-Banken und Online-Brokern ist bereits weit verbreitet. Dabei werden die Daten, die den Aktienkursverlauf wiedergeben, von einem Server der Online-Bank bzw. des Online-Brokers (oder einem von diesen beauftragten Unternehmen) über ein Datennetz, insbesondere das Internet, auf ein Terminal des Benutzers geladen. Dort werden die Daten statisch dargestellt, d.h. solange der Benutzer nicht einen neuen Herunterlade(Download)-Vorgang durch erneutes Anwählen der Adresse des Servers auslöst, bleibt die Darstellung der Daten auf dem Bildschirm des Benutzers unverändert.

Ausgehend von diesem Stand der Technik ist es Aufgabe der vorliegenden Erfindung, eine Technik bereitzustellen, die es beispielsweise einem Kunden von Online-Banken oder Online-Brokern ermöglicht, in einfacher Weise die Darstellung von Daten wie beispielsweise Aktienkursen auf dem Bildschirm seines Terminals individuell zu beeinflussen.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der vorliegenden Erfindung ist also ein Verfahren zur konfigurierbaren graphischen Darstellung von zeitbezogenen Daten wie beispielsweise Aktienkursen vorgesehen. Die darzustellenden Daten werden dabei von einem Server mittels eines Datennetzes, wie beispielsweise dem Internet, auf ein Terminal geladen. Die Daten werden dann auf einer Anzeigeeinheit des Terminals (beispielsweise einem PC) dargestellt. Schließlich kann die Darstellung der Daten auf der Anzeigeeinheit des Terminals individuell durch den Benutzer konfiguriert werden. Dies erfolgt dadurch, daß die Konfigurierung der Darstellung durch die von dem Benutzer mit einer Zeigersteuereinheit gewählte Position eines Kursors in der Darstellungsfläche der Daten auf der Anzeigeeinheit selbst angesteuert wird. Der Benutzer bewegt also beispielsweise mittels einer Maus den Kursor in die Darstellungsfläche selbst und löst dort die Konfigurierung der Darstellung in der Art und Weise aus, wie er es bspw. für seine Chart-Analysen benötigt.

Die Konfigurierung der Darstellung der Daten kann ein Vorgang sein ausgewählt aus den Vorgängen Verschieben oder Zoomen bzw. einer Kombination davon.

Die Konfigurierung kann insbesondere dadurch erfolgen, daß der Benutzer bei gedrückter Aktivierungstaste der Zeigersteuereinheit (Maus etc.) den Kursor innerhalb der Darstellungsfläche verschiebt.

Eine "Konfigurationsmöglichkeit", die direkt auf dem Chart möglich ist, ist noch das einfache Anklicken, wodurch die Detail-Anzeige aller zu diesem Zeitpunkt gehörigen Informationen bewirkt wird. Durch nochmaligen Klick kommt der Nutzer in den normalen Modus zurück. Dieses Anklicken ist überall in der Darstellungsfläche (Chart) möglich, nicht nur, aber auch, auf speziellen Schaltflächen. Die Schaltflächen zeigen an, wo zusätzlich ausführliche oder besonders wichtige Kommentare verfügbar sind. Dabei kann die Konfigurierung der Darstellung der Daten durch das Terminal ohne Interaktion mit dem Server erfolgen. Dies kann beispielsweise dadurch implementiert werden, daß neben den Daten selbst von dem Server ein Anwendungsprogramm in Form eines sogenannten Applets auf das Terminal des Benutzers geladen wird. Ein Applet ist dabei eine kleine, beispielsweise in der Programmiersprache Java programmiertes Programmelement, das im Web-Browser ausgeführt werden kann und allgemein die Interaktivität von Web-Angeboten verbessert.

Gemäß einem weiteren Aspekt der vorliegenden Erfindung ist ein Verfahren zur graphischen Darstellung von Daten vorgesehen, die von einem Server auf ein Terminal über ein Datennetz zur Darstellung auf einer Anzeigeeinheit des Terminals geladen wird. Dabei werden in der Darstellungsfläche der Daten markierte Schaltflächen angezeigt, an denen besondere Informationen dargestellt sind. Bei Aktivierung der Schaltflächen durch einen Kursor werden weitere Informationen wiedergegeben, die in einem Zusammenhang mit der Position der Schaltfläche in der Darstellungsfläche bzw. der Position der Schaltfläche bezüglich der dargestellten Daten stehen. Die Daten können insbesondere Aktienkursverläufe wiedergeben, wobei in diesem Fall die Schaltflächen an denjenigen zeitlichen Positionen eines Aktienkursverlaufs vorgesehen sind, an denen Ereignisse erfolgten, die für den Aktienkursverlauf von Bedeutung sein können.

Bei der Aktivierung der Schalflächen können neue Informationsfenster auf der Anzeigeeinheit erzeugt werden und/oder ein Link (Verweis auf ein anderes HTML-Objekt bzw. Web-Site) aktiviert werden.

Im Zuge des Herunterladens der darzustellenden Daten von dem Server auf das Terminal kann auch ein Anwendungsprogramm zur Durchführung der individuellen Konfigurierung der Darstellung der Daten heruntergeladen werden.

Der Kursor kann in der Darstellungsfläche als Fadenkreuzkursor dargestellt sein. Insbesondere kann der Kursor automatisch als Fadenkreuz dargestellt werden, sobald er in die Darstellungsfläche der Daten hineinbewegt wird. Dabei kann das Fadenkreuz des Fadenkreuzkursors die gesamte Darstellungsfläche der Daten überspannen.

Der Aufbau der Darstellung der Daten auf der Anzeigeeinheit kann nach und nach, sozusagen in einer Art Filmdarstellung, gemäß der zeitlichen Entstehungsgeschichte der Daten erfolgen.

Bei einer Bewegung des Kursors entlang der dargestellten Daten, insbesondere entlang eines Aktienkursverlaufes, kann eine akustische Anzeige erfolgen, deren Volumen und/oder Tonhöhe von dem Wert der dargestellten Daten im Bereich des Kursors abhängt.

Gemäß einem noch weiteren Aspekt der vorliegenden Erfindung ist ein Verfahren zur graphischen Darstellung von Daten, wie beispielsweise Aktienkursen, vorgesehen, wobei die Daten wiederholt von einem Server auf ein Terminal über ein Datennetz geladen werden, um im Zuge des wiederholten Ladens aktualisiert auf der Anzeigeeinheit des Terminals angezeigt zu werden. Der Benutzer kann dann wenigstens eine Grenzlinie in die Darstellungsfläche der Daten mittels Aktivierung eines Kursors in der Darstellungsfläche selbst definieren. Beispielsweise das Terminal löst dann automatisch eine Aktion aus, sobald der Graph, der die Daten wiedergibt, die Grenzlinie unter- oder überschreitet bzw. berührt.

Natürlich kann das Auslösen von Aktionen vom Client ("Terminal") aus geschehen, nur muß dafür der Benutzer auch online sein. Es gibt aber auch die Möglichkeit, die Einstellungen des Benutzers auf Wunsch auf dem Server zu speichern, und den Benutzer dann vom Server aus zu benachrichtigen - per mail, pager, fax, ... - egal, ob der User online ist oder nicht.

Die Aktion kann ein Kauf- oder Verkaufsauftrag für Aktien über eine Online-Verbindung und/oder eine Alarmierung (optisch, akustisch, etc.) eines Benutzers sein.

Gemäß einem noch weiteren Aspekt der Erfindung ist ein Software-Programm zur Implementierung eines solchen Verfahrens sowie eine Internet-Website beispielsweise einer Online-Bank oder eines Online-Brokers vorgesehen, die einem Benutzer eines Terminals das Herunterladen eines solchen Software-Programms ermöglicht.

Weitere Merkmale, Vorteile und Eigenschaften der vorliegenden Erfindung werden aus der folgenden Beschreibung von Ausführungsbeispielen und bezugnehmend auf die Figuren der beiliegenden Zeichnungen näher ersichtlich.
Figur 1 zeigt schematisch eine Darstellung eines Systems zur Ausführung der vorliegenden Erfindung,
Figur 2 zeigt das Leistungsmerkmal "Verschieben" in einer Darstellung vor (Figur 2a) bzw. nach (Figur 2b) des Vorgangs,
Figur 3 zeigt das Leistungsmerkmal "Hineinzoomen",
Figur 4 zeigt das Leistungsmerkmal "Herauszoomen",
Figur 5 zeigt das Leistungsmerkmal "markierte Schaltflächen, zur Wiedergabe von weiteren Informationen",
Figur 6 zeigt, wie mehrere Daten auf einer Anzeigefläche darstellbar sind,
Figur 7 zeigt das Leistungsmerkmal "Notizanfügung",
Figur 8 zeigt das Leistungsmerkmal "Zusatzinformationen", und
Figur 9 zeigt das Leistungsmerkmal "Movieeffekt", bei dem die Daten im Sinne einer Filmdarstellung nach und nach auf der Anzeige aufgebaut werden.

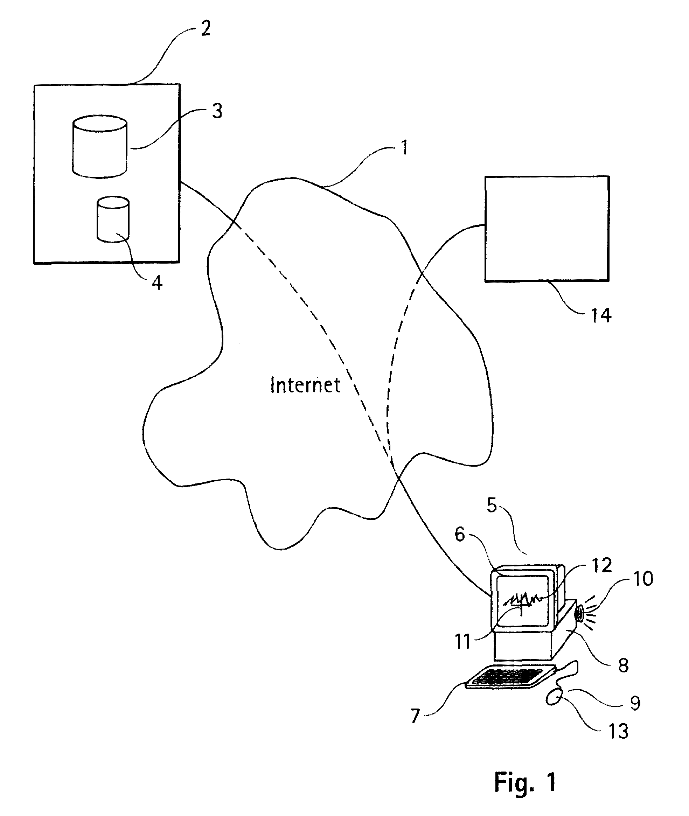

Bezugnehmend auf Figur 1 soll nunmehr ein Datennetz-Übertragungssystem erläutert werden, in dem die vorliegende Erfindung implementiert werden kann. Das zentrale Kommunikationsnetz ist dabei das Internet 1. Mittels dieses Kommunikationsnetzes 1 sind verschiedene Teilnehmer, wie beispielsweise ein Benutzer mit einem Terminal 5, ein Server 2 einer Online-Bank, eines Online-Brokers, oder eines von diesen beauftragten Unternehmens, sowie weitere Teilnehmer 14 angeschlossen. Das Terminal kann beispielsweise ein PC 5 sein, der neben einer Tastatur 7 eine Kursorsteuereinheit (Maus) 9, einen Bildschirm 6 mit einer Anzeigefläche 12, einen Prozessor 8 sowie eine Möglichkeit zur Ausgabe von akustischen Signalen (Lautsprecher) 10 aufweist.

Der Server 2 weist einerseits eine Datenbank 3 auf, in der laufend aktualisiert beispielsweise Aktienkursdaten abgelegt sind. Weiterhin ist in dem Server 2 ein Anwendungsprogramm (Applet) 4 abgelegt, das ebenfalls mittels des Internets 1 zu dem Terminal 5 des Users geladen werden kann.

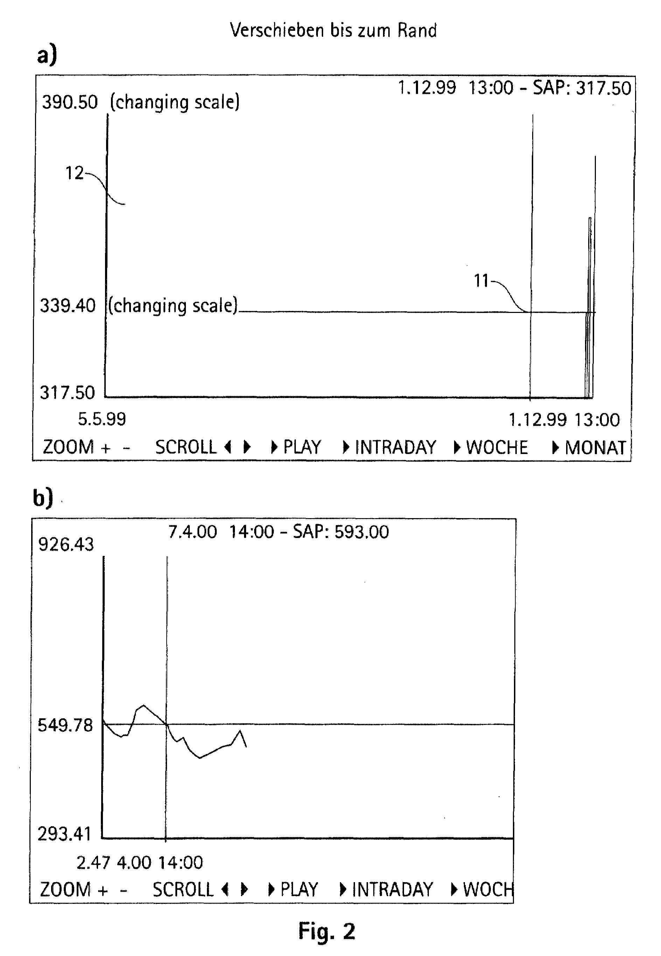

Bezugnehmend auf Figur 2 soll nunmehr zuerst allgemein das Prinzip der vorliegenden Erfindung erläutert werden.

Wenn der Benutzer des Terminals 5 die Adresse des Datennetz-Servers 2 angewählt hat, werden von dem Server 2 einerseits darzustellende Daten aus der Datenbank 3 und andererseits ein Anwendungsprogramm (Applet) 4 über das Internet 1 zu dem Terminal 5 geladen. Sobald dieser Ladevorgang beendet ist, ist im Grunde die Online-Verbindung für den weiteren Ablauf (mit Ausnahme sogenannter "Tickdaten" und anderer zeitnaher Daten, die laufend aktualisiert werden müssen) nicht mehr notwendig, da die Darstellung der Daten und die Ausführung des Anwendungsprogrammes, das zur Konfigurierung der Darstellung der Daten dient, durch den Prozessor 8 des Terminals 5 ohne Interaktion des Servers 2 ausgeführt werden können.

Zusammenfassend steht also dem Benutzer des Terminals 5 nach Abschluß des Herunterladens (Download-Vorgang) ein kompletter Datensatz für die darzustellenden Daten sowie ein auf dem Terminal 5 lauffähiges Anwendungsprogramm zur Konfigurierung der Darstellung der Daten auf dem Bildschirm 6 des Terminals 5 zur Verfügung. Selbstverständlich können die darzustellenden Daten im Sinne einer Echtzeitanwendung laufend aktualisiert werden, wenn eine Online-Verbindung besteht. Das einmalige Herunterladen eines Datensatzes ist aber grundsätzlich ausreichend, wenn das Anwendungsprogramm auf dem Terminal 5 zur Verfügung steht.

Zentraler Bestandteil der Konfigurierung der Darstellung der Daten auf der Darstellungsfläche 12 des Bildschirms (Anzeigeeinheit) 6 des Terminals 5 ist dabei die Betätigung des Kursors 11 mittels der Kursorsteuereinheit (Maus) 9 des Terminals 5. Wie in Figur 2 ersichtlich wird der Kursor auf der Darstellungsfläche 12 als Fadenkreuz 11 dargestellt, das im wesentlichen die gesamte Darstellungsfläche 12 für die Daten überspannt. Insbesondere wird der Kursor 11, der außerhalb der Darstellungsfläche übliche Formen (beispielsweise ein kleiner Zeiger) aufweisen kann, automatisch in einen Fadenkreuzkursor 11 "verwandelt", sobald der Benutzer mittels der Maus 9 den Kursor in die Darstellungsfläche 12 hineinbewegt. Bei der Herausbewegung des Kursors aus der Darstellungsfläche 12 erfolgt entsprechend der umgekehrte Vorgang.

Sämtliche im weiteren Verlauf geschilderten Konfigurierungsvorgänge für die Darstellung der Daten in der Darstellungsfläche 12 können dann vom Benutzer durch Aktivierung und gegebenenfalls Verschiebung des Kursors 11 in der Darstellungsfläche 12 der Daten selbst erfolgen. Es ist daher nicht notwendig, zur Konfigurierung der Darstellung der Daten beispielsweise Schaltflächen außerhalb der Darstellungsfläche 12 mit dem Kursor 11 durch eine entsprechende Bewegung der Maus 9 anzusteuern, um die Konfigurierung zu veranlassen. Dadurch, daß die Konfigurierung der Darstellung der Daten in der Darstellungsfläche 12 selbst ausgelöst und gesteuert wird, wird es dem Benutzer wesentlich erleichtert, eine Konfigurierung nach seinem Geschmack und Wünschen durchzuführen.

Allgemein sieht also ein Konfigurierungsvorgang für die Darstellung der Daten in der Darstellungsfläche 12 so aus, daß zuerst der Fadenkreuzkursor 11 auf einen bestimmten Punkt in der Darstellungsfläche 12 bewegt wird und dann der Kursor mittels entsprechender Mausbewegung bei aktivierter Taste 13 der Maus 9 auf der Darstellungsfläche 12 verschiebt, was in der Fachwelt oft als "Dragging" bezeichnet wird. Das Ausmaß der Bewegung des Kursors 11 in der Darstellungsfläche 12 ist ein Parameter für den Konfigurierungsvorgang.

Figuren 2a und 2b zeigen das Leistungsmerkmal "Verschieben", bei dem der Fadenkreuzkursor 11 an eine bestimmte Stelle der Darstellungsfläche 12 bewegt wird und dann bei gedrückter Maustaste 13 entsprechend der gewünschten Verschiebung durch den Benutzer verschoben wird. Die Verschiebung erfolgt als hinsichtlich ihrer Richtung wie auch hinsichtlich ihres Ausmaß entsprechend der Verschiebung des Kursors 11. Wenn wie dargestellt nur eine Verschiebung nach links oder rechts möglich ist, erfolgt die Verschiebung entsprechend der Komponente der Kursorbewegung parallel zu dieser Richtung.

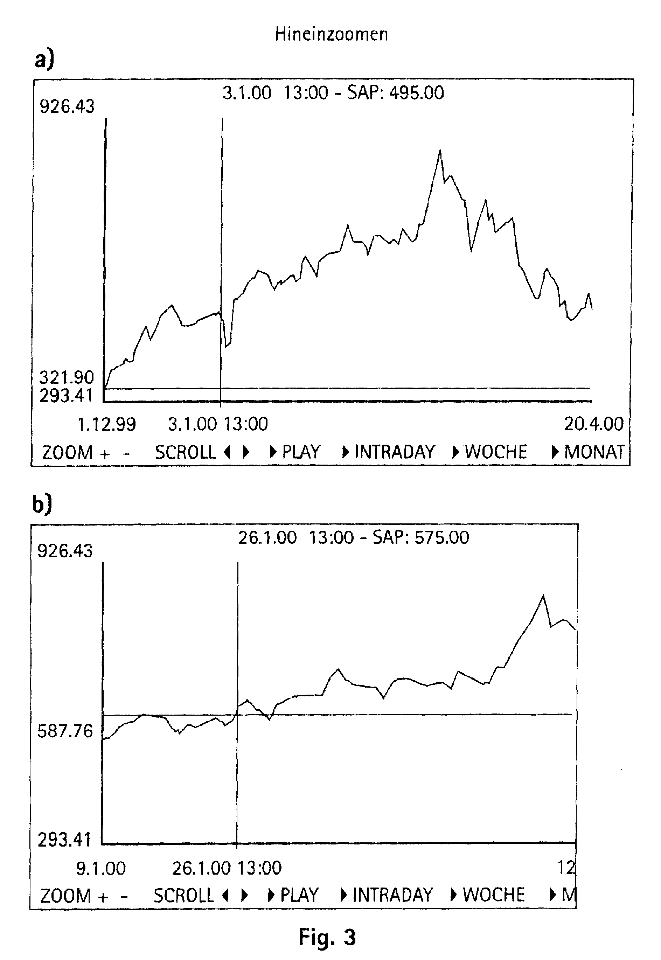

Figur 3a zeigt das Leistungsmerkmal "Hineinzoomen", bei dem zuerst durch das Fadenkreuz das Zentrum des Zoombereichs markiert wird und dann durch die Bewegung des Fadenkreuzkursors 11 unter gedrückter Maustaste 13 der Zoomfaktor festgelegt wird.

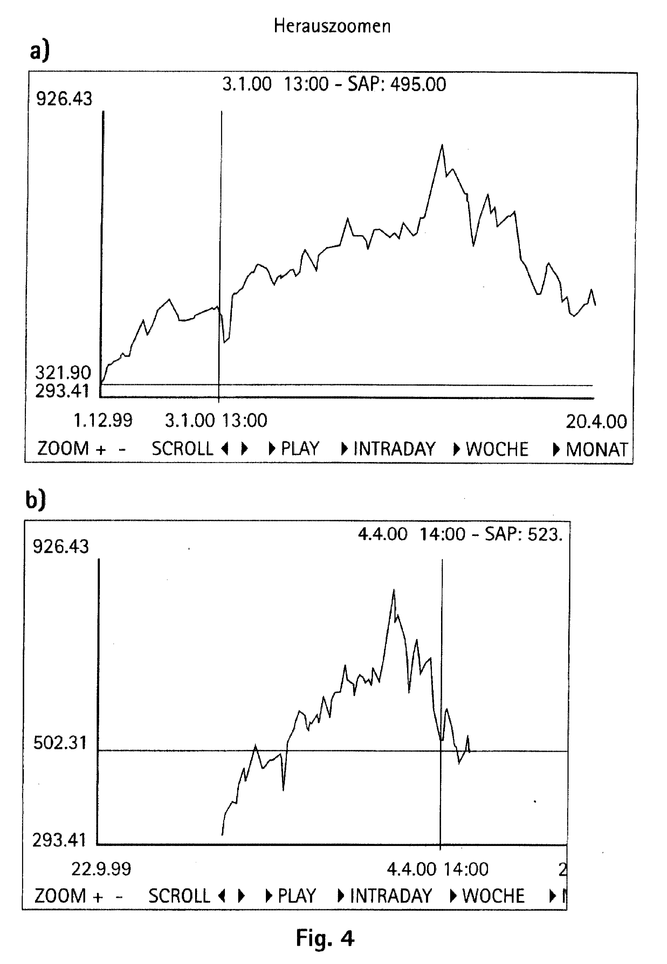

Figur 4 zeigt entsprechend das Leistungsmerkmal "Herauszoomen", das im wesentlichen dem umgekehrten Vorgang zu dem Leistungsmerkmal "Hineinzoomen" gemäß Figur 3 entspricht. Die Zoomvorgänge haben gemein, daß der Zoomfaktor eine lineare oder logarithmische Funktion der Kursorbewegung, insbesondere der Komponente der Kursorbewegung parallel zu der Zoomrichtung ist.

Durch diese Leistungsmerkmale "Zoomen" oder "Verschieben"("Scrollen") können also beispielsweise Aktienkurs-Grafiken (Charts) direkt so konfiguriert werden, wie es sich der Benutzer wünscht.

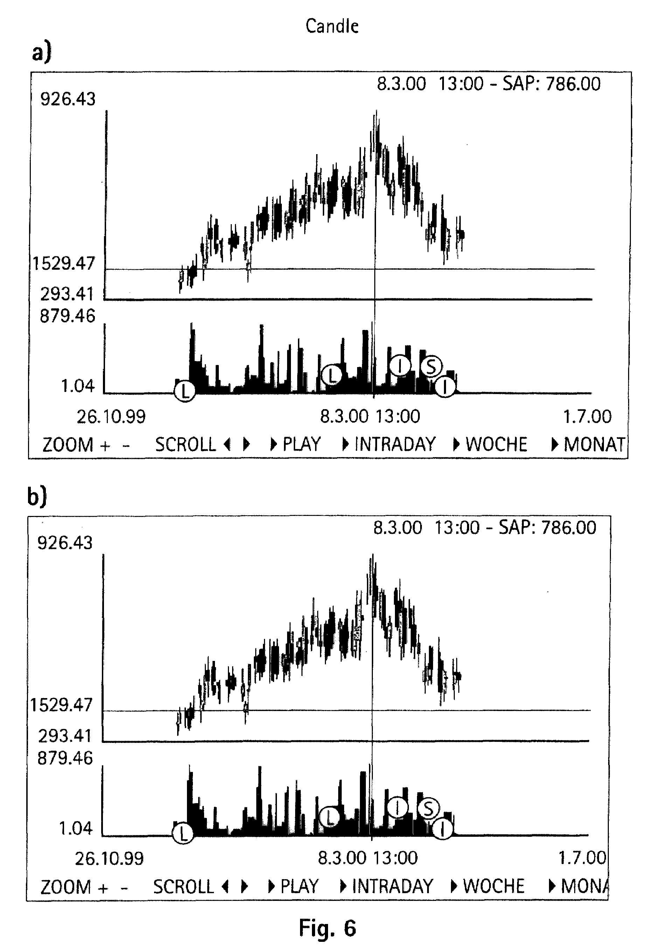

Beim Zoomen und/oder Verschieben einer Achse reagieren alle zueinander gehörenden (Zeit-)Achsen und Kurven, wenn der Chart mehrere Kurven/Achsen beinhaltet (wie bspw. in Figur 6 zu sehen, z.B. oben Kursverlauf, unten Handelsvolumen.

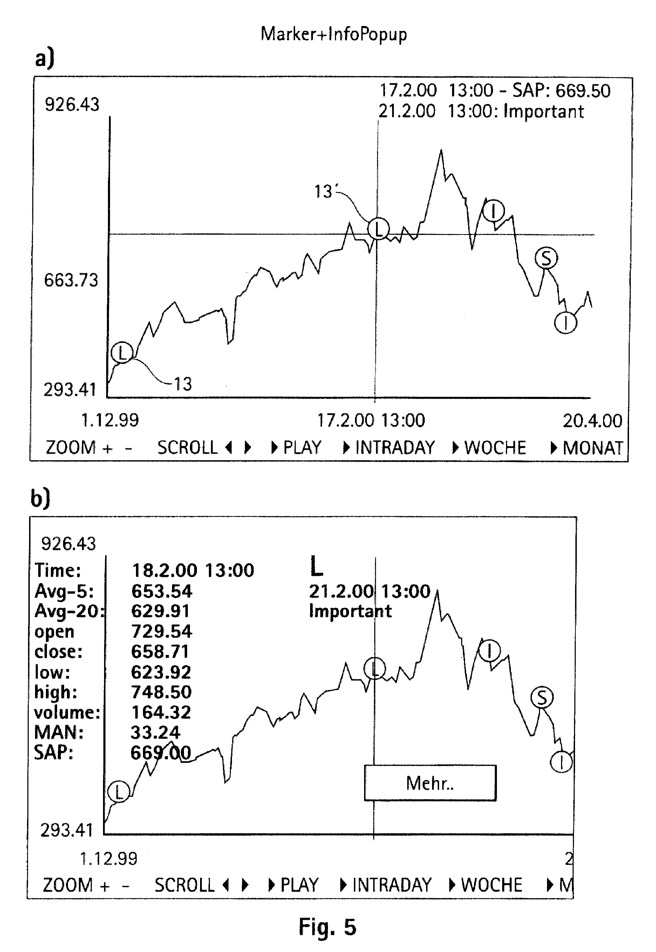

Figur 5 zeigt einen weiteren Aspekt der vorliegenden Erfindung. Gemäß diesem Aspekt sind markierte Schaltflächen 13, 13' in der Darstellungsfläche 12 der Daten vorgesehen. Diese Schaltflächen 13, 13' können von dem Betreiber des Servers 2 bereits angefügt sein. Alternativ oder zusätzlich kann die Möglichkeit bestehen, daß der Benutzer selbst derartige Schaltflächen 13, 13' in der dargestellten Grafik und insbesondere in einem Aktienkursverlauf anbringt. Diese Schaltflächen 13, 13' können beispielsweise an denjenigen Zeitpunkten eines chronologischen Aktienkursverlaufes vorgesehen sein, an denen zeitgleich Ereignisse stattfinden, die prinzipiell für den Kursverlauf einer Aktie von Bedeutung sein können.

Wenn nunmehr der Fadenkreuzkursor 11 auf eine solche Schaltfläche 13, 13' bewegt wird und dann die Maustaste 13 aktiviert wird, werden weitere Informationen angezeigt, die im Zusammenhang mit dem nächsten Umfeld bzw. genau der Position stehen, an der die Schaltfläche 13, 13' positioniert ist.

Diese weiteren Informationen können beispielsweise wie in Figur 5b gezeigt weitere Kursinformationen wie Höchstwerte, Umsatz und dergleichen sein. Weiterhin können sich weitere Fenster bei Betätigung der Schaltflächen 13, 13' öffnen, die Informationen aus dem Wirtschaftsleben, wie beispielsweise Gewinnwarnungen, Aktiensplits oder sonstige Verlautbarungen sind. Gegebenenfalls kann durch Aktivieren der Schaltfläche 13, 13' durch Betätigung der Maustaste 13 ein sogenanntes Link, d.h. ein Verweis auf eine andere Datei oder eine andere Adresse des Datennetzes (Internet) 1 aktiviert werden. Beispielsweise kann durch solche Schaltflächen auf die sogenannte Homepage desjenigen Unternehmens verwiesen werden, dessen Aktienkursverlauf gerade dargestellt wird.

Die Schaltflächen 13, 13' können also grafische Kommentar- und Verweis-Links wiedergeben. Somit können direkt in der Kursgrafik des Aktienkursverlaufs durch ein Symbol Ereignisse hervorgehoben werden, die bei Anklicken weitere Kommentare anzeigen und/oder weitere Internet-Seiten "verlinken".

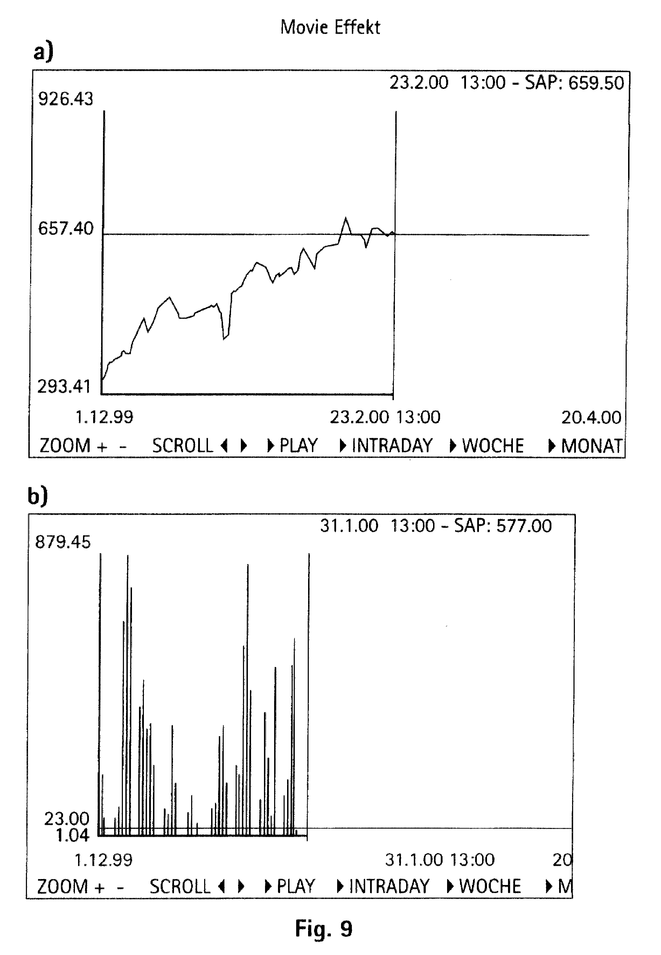

Eine weitere Konfigurationsmöglichkeit, die direkt auf der Darstellungsfläche (Chart) möglich ist, ist das einfache "Anklicken" durch Betätigung der Kursorsteuereinheit (bspw. einer Maustaste), wodurch die Detail-Anzeige aller zu diesem Zeitpunkt gehörigen Informationen bewirkt wird. Das Ergebnis dieser Funktion ist in Figur 9 dargestellt. Durch nochmaligen Klick kommt der Nutzer in den normalen Modus zurück. Dieses Anklicken ist überall im Chart möglich, nicht nur, aber auch, auf speziellen Schaltflächen. Die Schaltflächen zeigen an, wo zusätzlich ausführliche oder besonders wichtige Kommentare verfügbar sind.

Ein weiteres Leistungsmerkmal der vorliegenden Erfindung ist es, daß beim Bewegen des Fadenkreuzkursors 12, 12' entlang der dargestellten Daten, wie beispielsweise der Kursgrafik, eine akustische Anzeige 10 erfolgt, deren Volumen und/oder Tonhöhe von dem Wert der dargestellten Daten im Bereich des Kursors 11 abhängt. Beispielsweise kann beim Bewegen des Kursors 11 durch die Kursgrafik ein Ton abgespielt werden, dessen Höhe und Lautstärke dem Kurswert bzw. dem Handelsumfang oder anderen potentiell für den Aktienkurs relevanten Daten entsprechen. Tonhöhe und Lautstärke ermöglichen somit eine zweidimensionale akustische Informationswiedergabe.

Figuren 6a und 6b zeigen, daß zu den grafischen Darstellungen verschiedene Symbole gewählt werden können und darüber hinaus eine Mehrfachanzeige, beispielsweise von Aktienkurs und Handelsumfang, möglich ist. Dabei reagieren wie bereits gesagt beim Zoomen/Scrollen einer Achse alle zueinandergehörigen (Zeit-)Achsen und Kurven, wenn der Chart mehrere Kurven/Achsen beinhaltet, z.B. oben Kursverlauf, unten Handelsvolumen.

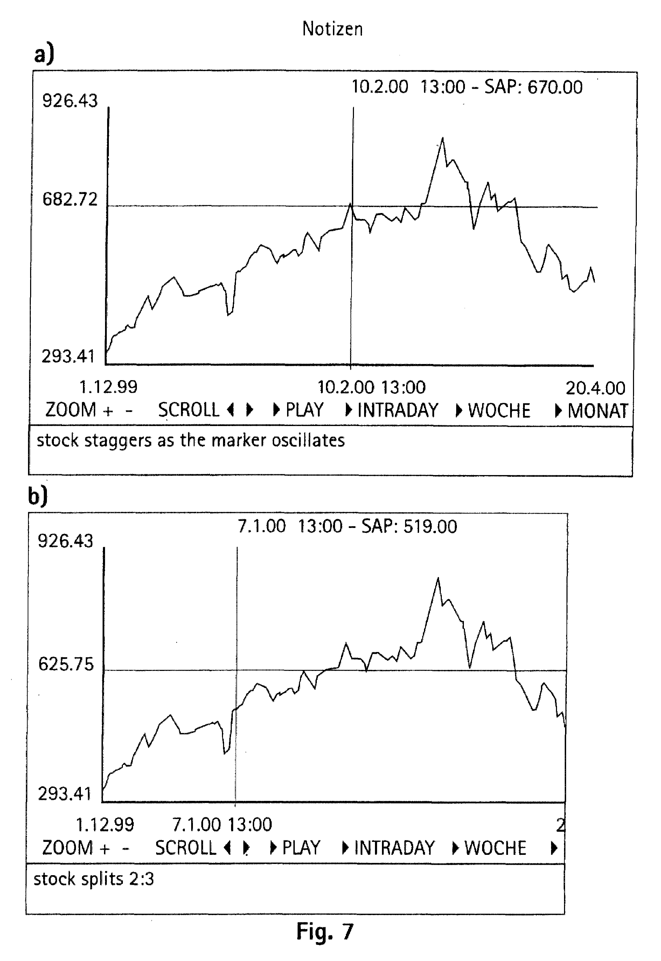

Figuren 7a und 7b zeigen, wie Notizen für bestimmte Zeitpunkte des Kursverlaufs angefügt werden können.

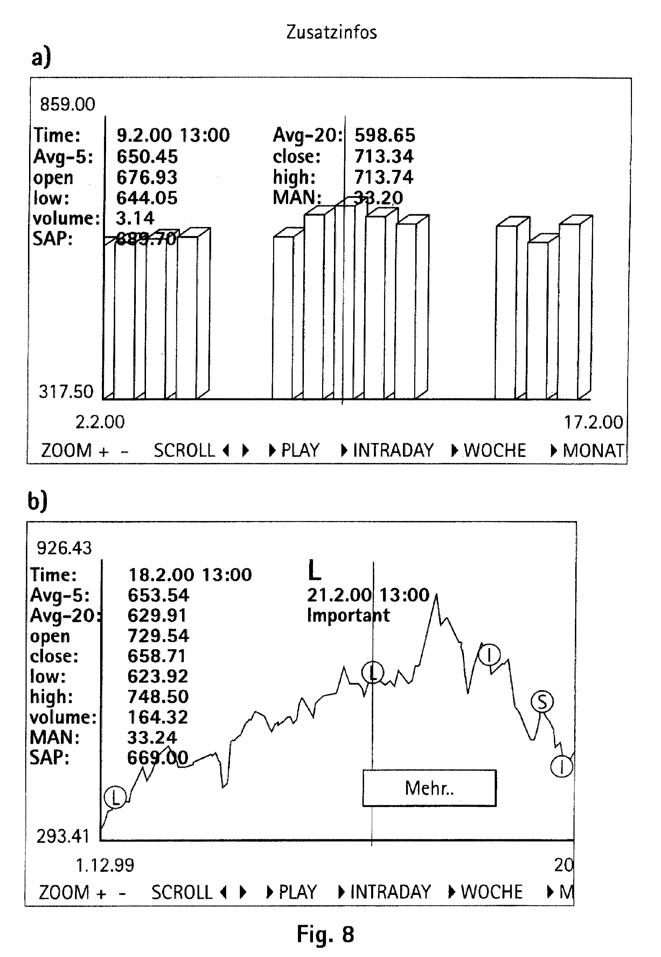

Figuren 8a und 8b zeigen Zusatzinformationen, die in den Kursverlauf eingespiegelt werden können.

Figuren 9a und 9b zeigen, daß bei der vorliegenden Erfindung der Aufbau der Darstellung der Daten in der Darstellungsfläche 12 der Anzeigeeinheit (Monitor) 6 sozusagen in der Art eines Films nach und nach gemäß der zeitlichen Entstehungsgeschichte der Daten erfolgen kann. Der Kursverlauf wird dann sozusagen als "Film" dargestellt, in dem sich die Kursgrafik in chronologisch richtiger Reihenfolge aufbaut. Dieses Leistungsmerkmal kann im Zusammenhang mit der akustischen Anzeige 10 gebracht werden, d.h. im Zuge des chronologischen Aufbaus der Kursgrafik wird ein Ton abgespielt, dessen Höhe und Lautstärke mit dem Kursverlauf korrespondieren.

Gemäß einem weiteren Aspekt der Erfindung kann der Benutzer Grenzlinien ("Radar-Linien") in der Darstellungsfläche 12 der Daten mittels Aktivieren des Kursors 11 in der Darstellungsfläche 12 selbst definieren. Das heißt, durch Positionieren des Fadenkreuzkursors 11 in der Darstellungsfläche 12 und anschließendes Verschieben der Kursorposition durch Betätigung der Maus 9 unter Aktivieren der Maustaste 13 können derartige Radar-Linien in die Kursgrafik eingezeichnet werden. Wenn nun beispielsweise der Kursverlauf, d.h. der Graph, der den Kursverlauf wiedergibt, die Grenzlinie unter- oder überschreitet (bzw. berührt), kann automatisch eine Aktion ausgelöst werden.

Der Benutzer kann beispielsweise durch die Grenzlinien in der Kursgrafik bestimmen, daß er benachrichtigt werden will (akustisch, optisch, SMS-Nachricht, Anruf, E-Mail, etc.), wenn der Kursverlauf eine dieser Grenzlinien durchbricht. Gegebenenfalls kann das Terminal 5 des Benutzers automatisch einen Kaufauftrag oder Verkaufsauftrag für eine bestimmte Aktie auslösen, falls der Kursverlauf die Grenzlinie durchbricht. Dies kann beispielsweise durch eine Online-Verbindung zu einem Online-Broker oder einer Online-Bank erfolgen.

Natürlich kann das Auslösen von Aktionen vom Client ("Terminal") aus geschehen, nur muß dafür der Benutzer auch online sein. Es gibt aber auch die Möglichkeit, die Einstellungen des Benutzers auf Wunsch auf dem Server zu speichern, und den Benutzer dann vom Server aus zu benachrichtigen - per E-Mail, Pager, Fax, ...-unabhängig davon ob der User Online ist oder nicht.

Darüber hinaus ist es möglich, sogenannte "Radar-Indikatoren" vorzusehen. Der Benutzer kann verschiedene mathematische Funktionen ("Indikatoren") auf Basis des Kursverlaufs und des Handelsvolumens mit Parametern versehen und einstellen, daß er benachrichtigt wird, sobald ein festgelegter Wert des Radar-Indikators über- oder unterschritten wird.

Eine weitere Funktion ist die Versendung einer ggf. kofigurierten Kursgrafik an Dritte. Bei Anwahl dieser Funktion werden alle von einem ersten Benutzer A an der Kursgrafik vorgenommenen Änderungen (Kommentaren, Linienstudien, Indikatoren, ...) unter einem Schlüssel gespeichert. Dieser Schlüssel wird in eine Internet-Adresse (URL) eingebettet und per E-Mail an die vom Benutzer A angegebene Adresse versandt. Der Empfänger dieser Nachricht, Benutzer B, kann nun diese Internet-Adresse weiterverfolgen und erhält daraufhin Zugriff auf die Kursgrafik mit den abgespeicherten Änderungen des Benutzers A. Im Endeffekt kann so der erste Benutzer seinen Chart mit seinen Kommentaren, Linienstudien etc. an andere Internet-Nutzer versenden.

Es kann dabei auch die aktuelle Darstellungsfläche 12 als Kursgrafik auf dem Internetserver abgespeichert und in diese E-Mail-Nachricht eingebettet werden. Hierbei wird der Kursgrafik als Hyperlink-Eigenschaft die genannte Internet-Adresse (URL) zugewiesen. Diese Einbettung setzt voraus, daß die E-Mail in einem entsprechenden Format wie z.B. HTML übertragen wird. Falls die E-Mail in einem reinen Textformat übertragen wird, kann die Kursgrafik als Anlage der E-Mail übersandt werden.

Die vorliegende Erfindung ermöglicht es also allgemein dem Benutzer, beispielsweise Aktienkursverläufe oder andere grafische Darstellungen auf dem Monitor 6 seines Terminals 5 in einfacher Weise zu konfigurieren bzw. mit weiteren Informationen zu verlinken. Gemäß der übergreifenden Idee der Erfindung erfolgt dies allgemein dadurch, daß eine Kursor-Aktivierung im Bereich der Darstellungsfläche 12 der relevanten Daten selbst erfolgt. Es ist für sämtliche genannte Aktionen nicht notwendig, daß der Benutzer Schaltflächen außerhalb der Darstellungsfläche betätigt. Darüber hinaus ist für die Konfigurierung keine Interaktion mit einem Server des Netzwerks 1 (Internets) notwendig, da das entsprechende Anwendungsprogramm 4 auf dem Terminal 5 ausgeführt wird. Somit wird der Konfigurierungsvorgang unabhängig von etwaigen Einschränkungen durch die Online-Verbindung. Zusätzlich entfallen auch Online-Kosten während des Konfigurierungsvorgangs, da dieser Offline ausgeführt werden kann.

## Patentansprüche

1. Verfahren zur konfigurierbaren graphischen Darstellung von zeitbezogenen Daten, wie bspw. Aktienkursen, aufweisend die folgenden Schritte:
- Laden der darzustellenden Daten von einem Server (2) auf ein Terminal (5) mittels eines Datennetzes (1),
- Darstellung der Daten auf einer Anzeigeeinheit (6) des Terminals (5), und
- individuelle Konfigurierung der Darstellung der Daten auf der Anzeigeeinheit (6) des Terminals (5),
wobei die Art der Konfigurierung der Darstellung durch einen Kursor (11) gewählt wird, der dazu in der Darstellungsfläche (12) der Daten selbst aktiviert wird.

2. Verfahren nach Anspruch 1,
**dadurch gekennzeichnet,**
**daß** die Art der Konfigurierung der Darstellung durch die Position des Kursors (11) in der Darstellungsfläche (12) gewählt wird.

3. Verfahren nach Anspruch 1 oder 2,
**dadurch gekennzeichnet,**
**daß** die Konfigurierung der Darstellung der Daten ein Vorgang ausgewählt aus Verschieben, Zoomen oder eine Kombination davon ist.

4. Verfahren nach einem der vorhergehenden Ansprüche,
**dadurch gekennzeichnet,**
**daß** die Konfigurierung dadurch erfolgt, daß der Benutzer bei gedrückter Aktivierungstaste der Zeigersteuereinheit (9) den Kursor (11) innerhalb der Darstellungsfläche (12) verschiebt.

5. Verfahren nach einem der vorhergehenden Ansprüche,
**dadurch gekennzeichnet,**
**daß** die Konfigurierung der Darstellung der Daten durch das Terminal (5) ohne Interaktion mit dem Server (2) erfolgt.

6. Verfahren nach einem der vorhergehenden Ansprüche,
**dadurch gekennzeichnet,**
**daß** durch Aktivieren einer Maustaste bei in der Darstellungsfläche (12) positioniertem Kursor die Detail-Anzeige aller zu diesem Zeitpunkt gehörigen Informationen bewirkt wird.

7. Verfahren zur graphischen Darstellung von Daten, wie bspw. Aktienkursen, aufweisend die folgenden Schritte:
- Laden der darzustellenden Daten von einem Server (2) auf ein Terminal (5) über ein Datennetz (1),
- Darstellung der Daten auf einer Anzeigeeinheit (6) des Terminals (5), und
wobei in der Darstellungsfläche (12) der Daten markierte Schaltflächen (13, 13') angezeigt werden, die bei Aktivierung durch einen Kursor (11) weitere Informationen wiedergeben, die in einem Zusammenhang mit der Position der Schaltfläche (13, 13') stehen.

8. Verfahren nach Anspruch 7,
**dadurch gekennzeichnet,**
**daß** die Daten Aktienkursverläufe wiedergeben und die Schaltflächen (13, 13') an denjenigen zeitlichen Positionen eines Aktienkursverlaufs vorgesehen sind, an denen Ereignisse erfolgten, die für den Aktienkursverlauf von Bedeutung sein können.

9. Verfahren nach Anspruch 7 oder 8,
**dadurch gekennzeichnet,**
**daß** bei Aktivierung der Schaltflächen (13, 13') neue Informationsfenster auf der Anzeigeeinheit (6) erzeugt werden und/oder ein Link zu einer weiteren Addresse des Datennetzes (1) aktiviert wird.

10. Verfahren nach einem der vorhergehenden Ansprüche,
**dadurch gekennzeichnet,**
**daß** weiterhin ein Anwendungsprogramm zur Durchführung der individuellen Modifizierung der Darstellung der Daten von dem Server (2) auf das Terminal (5) geladen wird.

11. Verfahren nach einem der vorhergehenden Ansprüche,
**dadurch gekennzeichnet,**
**daß** der Kursor in der Darstellungsfläche (12) als Fadenkreuzkursor (11) dargestellt ist.

12. Verfahren nach Anspruch 11,
**dadurch gekennzeichnet,**
**daß** der Kursor automatisch als ein Fadenkreuz (11) dargestellt wird, sobald er in die Darstellungsfläche (12) hinein bewegt wird.

13. Verfahren nach Anspruch 11 oder 12,
**dadurch gekennzeichnet,**
**daß** das Fadenkreuz (11) die gesamte Darstellungsfläche (12) der Daten überspannt.

14. Verfahren nach einem der vorhergehenden Ansprüche,
**dadurch gekennzeichnet,**
**daß** der Aufbau der Darstellung der Daten auf der Anzeigeeinheit (6) nach und nach gemäß der zeitlichen Entstehungsgeschichte der Daten erfolgt.

15. Verfahren nach einem der vorhergehenden Ansprüche,
**dadurch gekennzeichnet,**
**daß** bei einer Bewegung des Kursors (11) entlang der dargestellten Daten eine akustische Anzeige (10) erfolgt, deren Volumen und/oder Tonhöhe von dem Wert der dargestellten Daten im Bereich des Kursors (11) abhängt.

16. Verfahren nach einem der vorhergehenden Ansprüche,
**dadurch gekennzeichnet,**
**daß** alle von einem Benutzer vorgenommenen Konfigurationen abspeicherbar sind.

17. Verfahren nach Anspruch 16,
**dadurch gekennzeichnet,**
**daß** die abgespeicherten Konfigurationen als Schlüssel in einer Internet-Adresse zusammen mit einer eingebetteten Kursgrafik per E-Mail an eine Datennetz-Adresse versandt werden können.

18. Verfahren zur graphischen Darstellung von Daten, wie bspw. Aktienkursen, aufweisend die folgenden Schritte:
- wiederholtes Laden von darzustellenden Daten von einem Server (2) auf ein Terminal (5) über ein Datennetz (1),
- aktualisierte Darstellung der Daten in Form von Graphen im Zuge des wiederholten Ladens auf einer Anzeigeeinheit (6) des Terminals (5), und
- Definition wenigstens einer Grenzlinie in der Darstellungsfläche (12) der Daten mittels Aktivierung eines Kursors (11) in der Darstellungsfläche (12) selbst,
wobei automatisch eine Aktion ausgelöst wird, sobald der Graph die Grenzlinie unter-oder überschreitet.

19. Verfahren nach Anspruch 18,
**dadurch gekennzeichnet,**
**daß** die Aktion ein Kauf- oder Verkaufsauftrag für Aktien über eine Online-Verbindung und/oder eine Alarmierung eines Benutzers ist.

20. Software-Programm,
**dadurch gekennzeichnet,**
**daß** es in dem in einen Speicher eines Internet-Terminals (5) geladenen Zustand ein Verfahren nach einem der vorhergehenden Ansprüche implementiert.

21. Internet-Website, insbesondere einer Online-Bank,
**dadurch gekennzeichnet,**
**daß** sie einem Benutzer eines Terminals (5) das Herunterladen eines Software-Programms nach Anspruch 16 ermöglicht.
